# EUROPEAN PATENT SPECIFICATION

(11) **EP 3 516 092 B1**
(45) Date of publication and mention of the grant of the patent: **12.08.2020**
(21) Application number: 17787260.3
(22) Date of filing: 25.09.2017
(51) Int. Cl.: C25B 3/04, C25B 11/03, D21H 25/18, C08L 89/06

(54) **PROCESS FOR PRODUCING COLLAGEN PARTICLES**
VERFAHREN ZUR HERSTELLUNG VON KOLLAGENPARTIKELN
PROCÉDÉ DE PRODUCTION DE PARTICULES DE COLLAGÈNE

(30) Priority: 26.09.2016 IT 201600096336
(43) Date of publication of application: 31.07.2019
(73) Proprietor: Universita' degli Studi di Roma " Tor Vergata", 00133 Roma (IT)
(72) Inventor: CAMERINI, Ilaria, 00147 Roma (IT); BOARETTO, Aldrei, 00133 Roma (IT); VALENTINI, Federica, 00010 Montelibretti (IT)
(74) Representative: Celona, Antonio
(86) International application number: PCT/IB2017/055795
(87) International publication number: WO 2018/055584

(56) References cited:
- CHENG X ET AL: "An electrochemical fabrication process for the assembly of anisotropically oriented collagen bundles", BIOMATERIALS, ELSEVIER SCIENCE PUBLISHERS BV., BARKING, GB, vol. 29, no. 22, 1 August 2008 (2008-08-01), pages 3278-3288, XP022673752, ISSN: 0142-9612, DOI: 10.1016/J.BIOMATERIALS.2008.04.028
- Tom Albro ET AL: "Parchment Treatments", , 31 May 1994 (1994-05-31), pages 1-140, XP055385442, Retrieved from the Internet: URL:http://cool.conservation-us.org/coolai c/sg/bpg/pcc/18_parchment.pdf

## Description

### Field of the invention

The present invention relates to nanostructured collagen, in particular to collagen particles, and to a respective production process and uses thereof, in particular in the field of restoration.

### Background art

Antique membranous material, such as parchments, hides and leather, is subject to various degradation phenomena over time, in particular because of Red rot (leather), induced by the absorption of tropospheric SO₂(_{g}), which mainly affects hides which have undergone vegetable tanning *(*Melniciuc & Ardelean/ufficiale europeo della scienza e teologia(2008), 2, 51-59*).* Sulfur dioxide (SO₂(_{g})) is oxidized by vegetable tannins to sulfur trioxide (SO_{3(g)}), which by reacting with moisture in the air forms sulfuric acid, an aggressive pollutant responsible for the aging of the hide and of antique membranous material. Sulfuric acid breaks the polypeptide chains into amino acids and ammonium salts - mainly ammonium sulfate, which is deposited on the hide surface in the form of white powder. Under the action of sulfuric acid, the hide becomes brittle and begins to deteriorate and the presence of iron (Fe), both exogenous (environmental contamination) and endogenous (as Fe oxides and/or salts are used in the tanning process of membranous material and in the manufacturing process of leathers, hides and parchments) catalyzes the conversion of SO₂ into H₂SO₄. Traditional restoration treatments aimed to combat phenomena such as Red rot (leather) have some considerable drawbacks. In fact, the traditional consolidation technique involves the use of Klucel® G coupled to the deacidification of the supports using calcium propionate. Both conventional reagents entail risks. Traditional cellulose ethers, such as Klucel® G, are polymers capable of imparting viscosity to water and to highly polar solvents such as alcohols, forming clear, transparent, medium-high viscosity gels, depending on the concentration of the gelling material *(*Klucel Hydroxy propylcellulose, 1991*).* The main drawback is that these polymers are also strongly adhesive, especially on oxidized surfaces which have thus become polar, which may complicate the removal thereof subsequent to the application. Having to use excessive amounts of water, or solvent, for removal can in fact nullify the main advantage obtained with the gelling, that of limiting the intake of water/solvent. As regards calcium propionate, its inflammatory and inhibition of growth factors to mammalian cells is known from the literature *(*R.E. Singer, Butyrate and Propionate: Important Components of Toxic Dental Plaque Extracts, Infection and Immunity, 1981, 458-463*).* In addition, calcium propionate also seems to have genotoxic effects, as reported in SifaTurkoglu, et al.; Evaluation of genotoxic effects of sodium propionate, calcium propionate and potassium propionate on root meristem cells of Allium cepa, Food and Chemical Toxicology, 2008; 46(6):2035-41*.* Both traditional agents are known to leave residues on these supports, subjected to restoration treatment, which are so visible that today there is even talk of "residue question" (V. Dorge (Ed.), Solvent gels for the cleaning of works of art: the residue question, Getty Publications, Los Angeles, USA, 2004*).* Both products exhibit sensitivity to light, thus causing yellowing and shaded areas on the treated manuscripts.

The need of overcoming the drawbacks of the prior art is therefore felt. Cheng et al., Biomaterials, 29(22), 2008, 3278-3288 describe an electrochemical fabrication process for the assembly of anisotropically oriented collagen bundles. Albro et al, 1994, describe parchment treatments using collagen.

### Summary of the invention

An object of the present invention is to provide a product for the treatment of membranous supports, in particular collagen-containing supports, better than the known products.

In particular, an object of the invention is to provide such a product which is more effective, has longer lasting effects, is less aggressive and exhibits significantly higher efficiencies of restoration with respect to known products.

Another object of the present invention is to provide a process which allows the production, also at an industrial level, of such a product for the treatment of membranous supports, in particular collagen-containing supports.

The present invention, therefore, achieves at least one of the above objects by providing a process for producing collagen particles, wherein there is provided:
- an electrochemical cell with three electrodes, comprising
   - an electrolytic bath
   - a potentiostat/galvanostat
   - said three electrodes, of which a working electrode, a reference electrode and an auxiliary electrode, at least partially immersed in the electrolytic bath, connected together by the potentiostat/galvanostat,
   - a membrane at least partially covered by an electrically conductive metal layer and having a plurality of pores,
   wherein the membrane is removably constrained, or associated, to a surface of the working electrode and is immersed in the electrolytic bath,
   wherein the electrolytic bath contains tropocollagen at a concentration from 1 to 100 mM, in a buffered aqueous saline solution,
   the process comprising a step of
   a) applying a controlled electrochemical potential of between -0.05 and -3.0 V by means of the potentiostat/galvanostat;
   whereby at least one collagen particle is formed within each pore of the membrane. The invention also relates to collagen particles, in particular collagen spheres, tubules and cylinders, obtainable by the above process.

Furthermore, the invention also relates to a dispersion, in particular a colloidal system or a molecular aerosol containing the above collagen particles dispersed in a liquid.

In addition to that, the invention also relates to the use of the above collagen particles, in particular of the above dispersion, for the treatment of a collagen-containing support.

Typically, as will be further described, the collagen particles can be in the form of spheres, tubules or in the form of cylinders. Preferably, the spheres have an outer diameter of between 2 and 200 nm. Preferably, the tubules and the cylinders have an outer diameter of between 20 and 200 nm, and a length of between 100 and 500 µm. Given these dimensions, particles, spheres, tubules and cylinders may also be referred to respectively as nanoparticles, nanospheres, nanotubules and nanocylinders, or in general they may be referred to as "nanocollagen".

The tubules, or nanotubules, are typically hollow and thus have a wall thickness, or in other words they have an outer diameter and an inner diameter. Preferably, the inner diameter is of between 10 and 100 nm.

The cylinders, or nanocylinders, also called rods or nanorods, are typically internally solid.

Advantageously, the invention provides a process which allows the production, even on a large scale, of collagen particles, in particular in the form of spheres, tubules or cylinders. According to the invention, the collagen particles are used for the treatment of supports such as leather, parchments, hides, and in general membranous materials such as for example antique deteriorated writing supports. Such supports contain collagen and the collagen particles of the invention are able to reconsolidate the matter which constitutes the supports right in the bulk. An advantageous aspect is that there is indeed a substantial compatibility between the product of the invention and the supports to be treated, both from the compositional and the structural viewpoint.

The product of the invention provides a high efficiency and performance in preserving the supports for a very long time, ease of use, cost-effectiveness, biocompatibility for the operators (such as restorers and conservators), eco-sustainability, and is neither aggressive nor invasive to damaged supports needing restoration, consolidation and protection. In addition, the process of the invention is of the "Green Chemistry" type, environmentally sound and sustainable.

In particular, the products obtained with the process of the invention are particularly adapted for the consolidation of membranous supports (leathers, hides and parchments) which have deteriorated because of temperature and humidity conditions not adequate for the storage of such supports (particularly the relative humidity and temperature), as well as due to the chemical composition of the raw material with which the antique product was made.

According to one embodiment, collagen particles are provided, in particular spheres, tubules or cylinders, and a relative production process, which are substantially pristine in the sense that the collagen particles are not bound to other agents or additives. The electrolysis bath contains tropocollagen, which serves as a precursor for the formation of collagen particles within the pores of the membrane. Tropocollagen is at concentration ranging from 1 mM (i.e. 10⁻³ M) and 100 mM (i.e. 10⁻¹ M), in an aqueous solution of saline buffer; where M is the Molarity. Among the precursors it is also possible to use the collagen extracted from modern animal skin, the latter preferably belonging to the same original animal species from which the raw material was obtained for making the support to be restored, for example, of the papers and books heritage (indoor cultural heritage).

The collagen particles have excellent consolidating and reinforcement properties on the treated supports. An advantage of using the collagen particles for the consolidation of membranous material is given by the fact that collagen, particularly nanostructured collagen, substantially has the same or similar chemical composition and the same or similar morphology as a collagen-containing support, such as a parchment, a hide and a leather.

According to another embodiment, collagen particles are provided, in particular spheres, tubules or cylinders, which are functionalized with a molecular additive, such as polyvinyl alcohol (PVA) or calcium carbonate (CaC0₃). In other words, the collagen particles are intimately modified with an additive, such as PVA or CaCO₃. When the additive is CaCO₃, typically the electrolysis bath also contains CaCO₃ molecules, preferably CaCO₃ nanoparticles which, present in the same electrolysis bath as tropocollagen, contribute to the formation of a nanocomposite containing collagen particles and CaCO₃ nanoparticles bound together. CaCO₃ is a stabilizing agent being a source of calcium for the support to be treated, thereby restoring the content of Ca intrinsic to the membranous support.

When the additive is PVA, which is an adhesive agent, the electrolysis bath also contains PVA molecules. A nanocomposite substantially results from the process which comprises the collagen particles bound to PVA molecules, in particular to PVA nanoparticles. The functionalization of the collagen particles with PVA provides a product with excellent consolidation properties as it also has adhesive and glue properties, which derive from the PVA itself. In fact, the collagen particles functionalized with PVA are particularly adapted as a consolidating agent and as an adhesive, while the collagen particles alone are an excellent consolidating agent. The nanocollagen/PVA nanocomposite has, in a single formulation, two fundamental features for the consolidation of leather, hides and parchments. Instead, according to the prior art, the products intended for the consolidation are different from those used for sizing (i.e. provided with adhesive power), and this leads to an increase of the restoration times and costs.

According to the invention, when a controlled potential is applied across the electrodes, the collagen particles begin to grow within the pores of the membrane, or template membrane, constrained to the working electrode. The collagen particles are thus generated. When PVA is present in the electrolysis bath, the collagen nanotubes intimately interact with the PVA molecules present in the electrolytic bath. Typically, but not exclusively, there are mixed molecular interactions: covalent, hydrogen bonds, weak electrostatic interactions and hetero-polar interactions. A similar mechanism occurs when CaCO₃ is present in the electrolysis bath, although a physical/mechanical entrapment mechanism is also provided for the latter, in particular intercalation of the CaCO₃ nanoparticles in the nanocollagen structure. Advantageously, the production process of nanocollagen, i.e. of collagen particles, functionalized or non-functionalized, is of the electrochemical type.

This allows to have an excellent control on the end product, in particular in terms of shape, size, density of the nanotubules, degree of optional functionalization and its orientation in space. In particular, nanotubules or nanocylinders aligned with the membrane surface allow higher consolidation/restoration efficiencies and stabilization of the membranous supports. A large-scale production for large volumes is also possible.

According to one embodiment, the collagen particles contained in the pores of the membrane are extracted by washing of the latter, and collected to form a dispersion with a liquid. By way of a non-limiting example, the dispersion can be a solution, a colloidal system or a molecular aerosol. The liquid of the dispersion can be, for example, water or an aqueous solution, an alcohol, or a hydroalcoholic solution. The dispersion can be applied to the membranous support by spraying or with the aid of a brush, for example according to the restoration methods reported in the Technical Type Specification *(Capitolato Speciale Tecnico Tipo, by Luca Richard De Bella, et al.; with the advice of Marina Bicchieri, Director of the Laboratory of Chemistry of ICRCPAL_ISTlTUTO CENTRALE PER IL RESTAURO E LA CONSERVAZIONE DEL PA TRIMONIO ARCHIVISTICO E LIBRARIO).*

Preferably, but not exclusively, at least the working electrode has a cylindrical shape with a ratio between the diameter of the base and the height of between about 0.03 and 0.3 (extreme values preferably included), preferably with a tolerance of ±10%. Advantageously, this shape ensures a semi-infinite linear diffusion process on the working electrode surface, in particular on the lower face of the membrane.

The dependent claims describe particular embodiments of the invention.

### Brief description of the figures

Further features and advantages of the invention will appear more clearly from the detailed description of embodiments of a process for producing collagen particles and related uses, described by way of a non-limiting example with the aid of the accompanying drawings, in which:
Fig. 1 shows a schematic representation of an electrochemical cell according to the invention;
Fig. 2 shows a schematic representation of another electrochemical cell according to the invention;
Fig. 3 shows a micrograph of a collagen particle according to the invention, obtained by means of transmission electron microscopy HR-TEM/EDAX (High-Resolution Transmission Electron Microscopy/Energy Dispersive X-Ray Microanalysis);
Figs. 4a and 4b show a SEM micrograph of a portion of non-treated sample and the same portion treated with a product of the invention, respectively;
Fig. 5 shows a portion of a porous membrane suitable for being used in the process of the invention.

The same reference numerals in the figures identify the same elements or components or elements similar to each other.

### Detailed description of embodiments of the invention

With reference to the figures, the present invention provides a process for producing collagen particles, wherein there is provided:
- an electrochemical cell with three electrodes, comprising
   - an electrolytic bath 6
   - a potentiostat/galvanostat 7
   - said three electrodes, of which a working electrode 2, a reference electrode 3, and an auxiliary electrode 4, at least partially immersed in the electrolytic bath 6, connected together by the potentiostat/galvanostat 7,
   - a membrane 8 at least partially covered by an electrically conductive metal layer and having a plurality of pores 9,
   wherein membrane 8 is removably constrained to a base of the working electrode 2, and is immersed in the electrolytic bath 6, wherein the electrolytic bath 6 contains tropocollagen or collagen extracted from animal skin, such as calf, at a concentration from 1 to 100 mM, in a buffered aqueous saline solution,
   the process comprising a step of
   a) applying a controlled electrochemical potential E/V in the range between -0.05 and -3.0 V, in particular vs. Ag/AgCI/KCI as the reference electrode, by means of the potentiostat/galvanostat 7;
      whereby at least one collagen particle is formed within each pore 9 of membrane 8. Typically, but not exclusively, when the particles are nanotubules or nanocylinders, a nanotubule or a nanocylinder is formed inside of each pore 9 of membrane 8.

The electrochemical potential E/V can take a constant value, or can vary over time, remaining between -0.05 and -3.0 V, as a function of the electrochemical technique which is applicable for the synthesis. When the electrochemical potential varies over time, preferably it increases linearly over time (linear potential scanning ramp), or it can be a square pulse superimposed, at a certain frequency, to the linear scanning ramp.

For example, when the Chrono Amperometry technique is used, the electrochemical potential applied maintains a constant value over time. When the differential pulse voltammetry technique is used, the electrochemical potential which is applied varies over time.

The potentiostat/galvanostat 7 applies the potential to the three electrodes 2, 3, 4. The potentiostat/galvanostat 7 is connected to the three electrodes 2, 3, 4 as is typically provided in the electrochemical cells of the type with three electrodes.

In particular, the working electrode 2 and the reference electrode 3 are connected by means of the potentiostat/galvanostat 7, so that the reference electrode 3 can apply a potential E/V which for example remains constant throughout the duration of the synthesis/measurement. The working electrode 2 and the auxiliary electrode 4 are connected to the amperometric circuit of the potentiostat/galvanostat, so as to be able to record the passage of current while the electrochemical transfer phenomenon occurs at the terminals of the working electrode 2 (the control of the current passing and its profile over time allow to control the goodness of growth and its termination, especially when saturation of the electrolysis phenomenon occurs). With reference to the working electrode 2, it is preferable that it is sheet-shaped or cylinder-shaped. When it is sheet-shaped, it preferably has a rectangular shape having a base, a height and a thickness, with the thickness much smaller than the base and the height. Typically, the working surface of the working electrode is sheet-shaped.

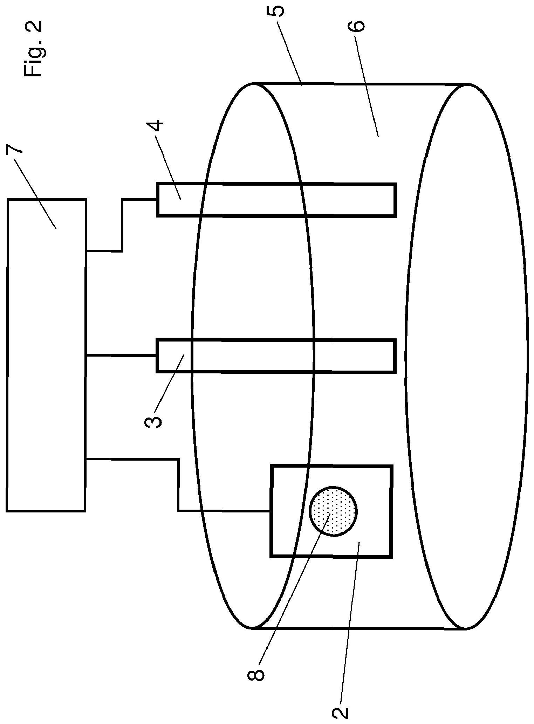

The configuration with the sheet-shaped working electrode is schematically shown in Fig. 2.

Preferably, the height is equal to about twice the base, with a tolerance of ±10%. For example, the base may be comprised between 2 and 5 cm; the height may be between 4 and 10 cm; and the thickness may be between 0.5 and 2 mm. Moreover, when the working electrode is a sheet of rectangular shape, the membrane is removably fixed to a surface, in particular to a face of the sheet, preferably at the center. The fixing is preferably done by means of a seal provided with fastening nuts. Since the membrane typically has a smaller surface extension than the rectangular working electrode, the portion of the working electrode surface not covered by the membrane is electrically insulated, for example by means of insulating tape or other insulating means.

When the working electrode is cylinder-shaped, the cylinder has a base diameter A and a height L. Preferably, the ratio between base diameter A and height L is of between 0.03 and 0.3 ±10%. In particular, the tolerance preferably ranges up to ±10%, for example, the tolerance can be ±3%, ±5% or ±10%. For example, the working electrode is a cylinder having a height equal to about 30 cm, with a base diameter equal to about 1 cm. Or, according to another example, the working electrode is a cylinder having a height equal to about 10 cm, with a base diameter equal to about 3 cm.

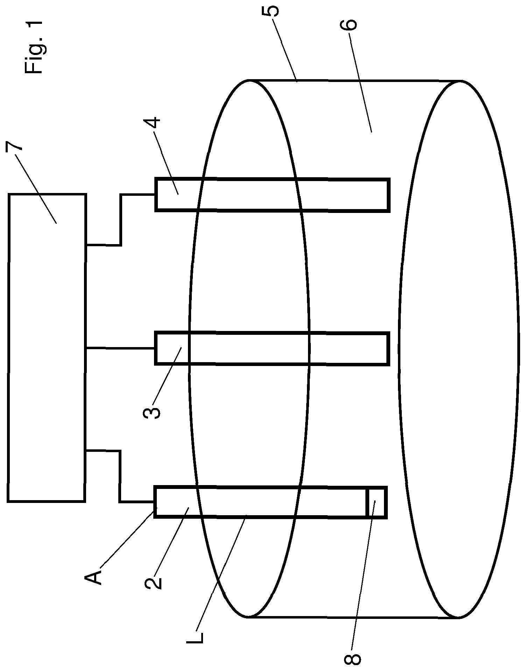

The configuration with the cylinder-shaped working electrode is schematically shown in Fig. 1.

In such a configuration, the membrane 8 is constrained or fixed to the base of the working electrode 2, i.e. to the base distal from the connection to the galvanostat/potentiostat. The fixing between the working electrode 2 and membrane 8 is reversible, meaning that the membrane can be easily detached from the working electrode 2. This fixing takes place by means of fixing means, for example by means of a ring or seal, also known as O-ring, preferably provided with fastening nuts. The working electrode 2 is preferably made of a noble and/or semi-noble metal, such as Au, Pt, Pd, Ag. Other metallic materials can be Cu and steel, for example AISI316L.

By way of example, the working electrode may be of the 492/CU/3 Copper type, diameter of 3 mm.

Typically, in the process of the invention, the working electrode acts as a cathode (the tropocollagen and/or the collagen extracted from modern animal undergo a reduction process at the terminals of the template electrode membrane).

When the membrane 8 is fixed to the working electrode 2, the membrane 8 is part of the working electrode 2. There is an electrical connection between the working electrode 2 and membrane 8 due to the layer of electrically conductive material. In particular, the membrane is fixed, preferably sealed, to the electro-active surface of the working electrode 2. As mentioned above, it is preferable that the seal is screwed to the working electrode 2, by means of screws and nuts, in particular when using an Al₂OR₃ (alumina) membrane, which is very fragile.

Membrane 8 is preferably made of alumina, polycarbonate, polyacetate or cellulose or derivatives thereof. Membrane 8 is disc-shaped and preferably has a diameter of between 13 and 47 mm, for example about 25 mm, and a thickness of between 100 and 500 µm. In the case of cylindrical working electrode, an optimal operation is obtained when the diameter of membrane 8 is substantially equal to the base diameter A of the working electrode.

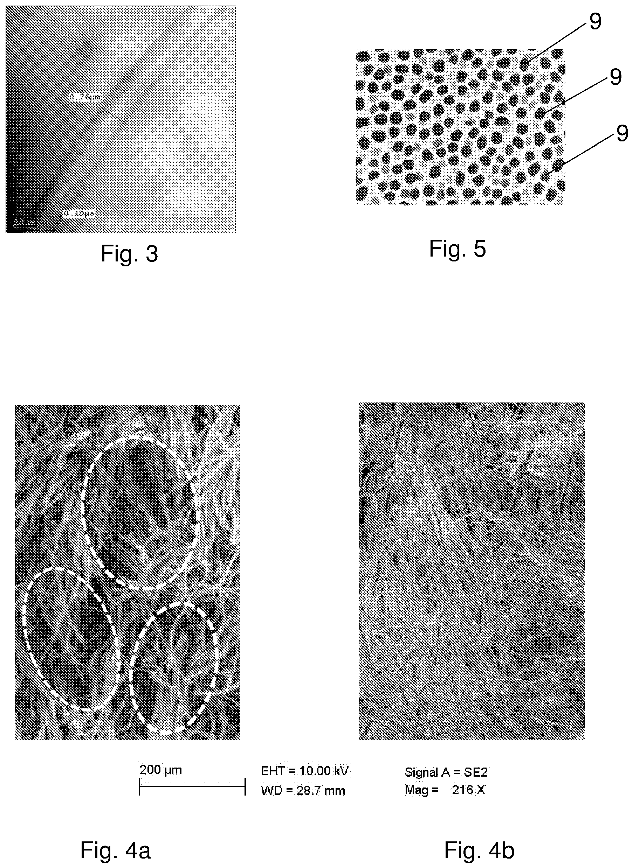

Membrane 8 has a pore density preferably of between 1×10¹¹ and 1 ×10¹⁴ pores/cm², for example 1×10¹² pores/cm². The diameter of each pore of the membrane is preferably between 2 and 400 nm, for example about 200 nm. It is also preferable that the pores of membrane 8 have all substantially the same size. Typically, they are pores having a substantially cylindrical shape. Fig. 5 shows by way of example an enlarged image of a portion of a membrane.

By way of example, a Whatman membrane model (WHA68096022 ALDRICH Whatman Anodisc inorganic filter supported membranes, diam. 25 mm, pore size 0.2 µm) may be used. Preferably, the pores traverse membrane 8 completely, throughout the thickness thereof, and are oriented perpendicular to the two parallel faces of membrane 8. During the growth process of collagen particles, the membrane pores act substantially as a template or as a guide for the controlled and oriented growth of nanocollagen, whereby the membrane may also be referred to as template membrane.

The electrically conductive metal layer which covers the membrane is preferably made of a noble metal, such as gold, silver, platinum. Preferably, the thickness of the metal coating layer is of between 10 and 50 nm, preferably it is equal to about 19 nm. Typically, the metal layer covers both faces of the membrane.

By way of example, the membrane may be coated with the metal layer by means of sputtering, namely deposition from the vapor phase. Preferably, but not exclusively, the coating layer does not penetrate inside the pores. In order to obtain this type of coating which does not penetrate into the pores, the following sputtering process parameters may be used, only by way of example: current = 25 mA; sputtering time = 2 minutes; target (coating material) = pure gold. These parameters allow to deposit a metal film with a thickness of 19 nm on the surface of the membrane (measured with both AFM (Atomic Force Microscopy) and with profilometer).

The reference electrode 3 is preferably a second species reference electrode Ag/AgCI, such as Ag/AgCI/KCI; or it may be a pseudo-reference of Ag/AgCl; or it may be a saturated calomel electrode.

By way of example, a reference electrode may be AMEL 373/SSG/6 373-SSG-6Ag/AgCI, 3 mol/L KCI refilling solution, 6 mm diameter, 110 mm length. Another example of a reference electrode is of the saturated calomel type, AMEL 303/SCG/6 303 Calomel, Saturated KCI refilling solution, 6 mm diameter, 110 mm length. The auxiliary electrode 4, also known as counter-electrode, is preferably made of a noble and/or semi-noble metal, such as Au, Pt, Pd, Ag, or graphite. Other metallic materials may be Cu and steel, for example AISI316L.

Preferably, the three electrodes 2, 3 and 4 have the shape of a planar sheet or a cylindrical shape.

Advantageously, with these shapes the Fick equation (I and II diffusion equation) still applies. In fact, with different geometric shapes (e.g. truncated cones thinned with a puller, until obtaining a thin tip which constitutes the electro-active surface of micro-electrodes (IUPAC DEFINITION OF MICROELECTRODE, Pure and Applied Chemistry, 72 (2000) 1483*:* Electrodes with a linear dimension (critical dimension) 10 nm < r < 50µm; discs, etc.) the contribution of linear semi-infinite spontaneous diffusion current by electro-active species, such as precursors or additive molecules for functionalization, such as tropocollagen, PVA or CaCO₃, is added to that of the limit current which is recorded at steady state (and the smaller the microelectrodes, the faster the limit current of steady state is reached, resulting in the termination of the electrochemical synthesis process, a phenomenon which must be avoided for the controlled growth of the new material). In addition to the shape factor, for the Fick diffusion laws to continue to apply, it is preferable that, in the case of cylindrical electrodes, the diameters of the respective base circumferences of the cylindrical electrodes 2, 3, 4 are comprised between 1 and 12 mm, preferably between 3 and 5 mm, more preferably between 1 and 3 mm. Preferably, also for the reference electrode 3 and the auxiliary electrode 4, the base diameter/height relation = between 0.03 and 0.3 ±10% applies.

The electrochemical cell also comprises a receptacle 5, preferably of borosilicate glass, containing an electrolysis bath 6, or electrolytic bath or electrolytic solution, in which electrodes 2, 3 and 4 are partially immersed, typically at a distance dictated by the connections with the potentiostat/galvanostat 7.

The electrolytic bath 6 comprises tropocollagen at a concentration from 1 to 100 mM, in a buffered aqueous saline solution. Preferably, the electrolytic bath 6 comprises tropocollagen fibers, for example Sigma-Aldrich standard, Type I. Preferably, the tropocollagen fibers have a length of between 100 nm and 400 nm, a diameter of between 1 and 5 nm, and molecular weight (MW) of between MW∼150,00.00KDa and MW∼600,00.00KDa. For example, the tropocollagen fibers have: length of about 280 nm; diameter of about 2 nm; and MW∼300,00.00KDa; or length of about 400 nm; diameter of about 5 nm; and MW∼600,00.00KDa; or length of about 100 nm; diameter of about 1 nm; and MW∼150,00.00KDa).

The synthesis process of collagen particles takes place preferably in the presence of a stream of inert gas, such as nitrogen gas. Preferably, it is a steady stream with a flow rate of between 0.1 and 1.0 cm³/min, for example equal to about 0.3 cm³/min. This is a relatively low flow to minimize the turbulence phenomena in the electrolysis cell which would compromise the spontaneous diffusion in the pores of the membrane.

In order to ensure a homogeneous mixing of the electrolysis solution, preferably during the process, the electrolytic bath it is subjected to stirring, such as by immersing a magnet in the bath and placing receptacle 5 on a magnetic plate, not shown.

In order not to alter the activity of tropocollagen, which is the precursor of collagen, the temperature at which the process is conducted is preferably monitored, for example with a thermocouple. Preferably, the process takes place at room temperature, for example at a temperature of between 20 and 25 °C.

Preferably, after step a), the following steps are carried out:
b) detaching the membrane containing the collagen particles from the working electrode (2);
c) washing the membrane to remove the electrically conductive metal layer, such as silver, with an acid solution, such as nitric acid HNO₃;
d) dissolving the membrane by means of a solvent (such as soda NaOH for an Al₂O₃ membrane) in order to extract the collagen particles from the membrane pores.

When the membrane is constrained to the working electrode by means of an O-ring, it will be sufficient to remove the latter to separate the membrane from the working electrode (step b).

Acid solutions suitable for removing the electrically conductive metal layer for example are concentrated acid solutions.

When the membrane is made of alumina (Al₂O₃), suitable solvents are acid solvents, such as HNO₃. In fact, the Al₂O₃ membrane completely dissolves into HNO₃ while the collagen particles are insoluble in acid solvents.

When the membrane is made of polycarbonate, a suitable solvent for example is diethyl ether.

Typically, once the membrane has dissolved, a washing is carried out to remove the solvent used to dissolve the membrane. For example, a washing cycle with centrifuge may be carried out, using distilled water or aqueous solutions. Once washing has been carried out, a dispersion is obtained which comprises the collagen particles dispersed in a liquid. Preferably, the washing cycle is carried out until a dispersion is obtained with about neutral pH.

The dispersion may be a solution, a colloidal system or a molecular aerosol. The liquid of the dispersion may be, for example, distilled water or an aqueous solution, an alcohol, or a hydroalcoholic solution, preferably water:alcohol = 70:30 v/v). The hydroalcoholic solution may be for example 70:30 v/v water/isopropyl alcohol. The dispersion may be applied to the membranous support by spraying or with the aid of a brush.

According to a variant, the electrochemical cell is configured to obtain collagen particles bound to PVA, or in other words collagen particles functionalized with PVA. In this case, the buffered aqueous saline solution is an acetate buffer solution. In addition to tropocollagen at the concentrations defined above, the acetate buffer also comprises PVA molecules dissolved in solution. PVA is preferably present at a concentration of between 0.025 mg/ml and 5 mg/ml, for example about 0.05 mg/ml or about 1 mg/ml or about 2 mg/ml or about 5 mg/ml.

The acetate buffer solution preferably has a concentration of between 0.025 M and 0.2 M, for example about 0.1 M; pH of between 3.76 and 5.76 pH units, for example about 4.7. It is preferable that the ionic strength µ of the acetate buffer is between 0.01-0.5M, or between 0.02 M and 0.2 M or between 0.05-0.1 M.

In this variant, preferably, a controlled and constant electrochemical potential E/V of between -1.0/V and -3.0 V is applied, preferably equal to about E = -2.0 V. The application time preferably ranges between 30 minutes and 16 hours, preferably between 30 minutes and 4 hours, and preferably is equal to about 1 hour or about 2 hours, under controlled stream of inert gas, preferably nitrogen.

The collagen particles produced, in particular each collagen particle 8 produced, are functionalized with PVA.

In particular, PVA is covalently trapped into the collagen particles by reaction between its secondary alcohol groups (R-OH-) and the primary amino (-NH₂-) and end carboxyl (-C(=O)OH) groups of collagen (tropocollagen). It is also conceivable that part of the collagen/PVA interaction is also weak in nature (not covalent), for example of the hydrogen bonding type, and/or an electrostatic interaction of a Coulomb nature, or just physical/mechanical entrapment.

According to another variant, the electrochemical cell is configured to obtain collagen particles bound to CaCO₃, or in other words collagen particles functionalized with CaCO₃. In this case, the buffered aqueous saline solution is a carbonate buffer. In addition to tropocollagen at the concentrations defined above, the carbonate buffer also comprises CaCO₃ molecules dissolved in solution. CaCO₃ is preferably present at a concentration of between 0.025 mg/ml and 2mg/ml, for example about 0.025 mg/ml or about 1 mg/ml or about 2 mg/ml.

Preferably, the electrolysis solution is in the form of an aqueous CaCO₃ nanodispersion. By way of example, in order to solubilize CaCO₃, for example at a concentration of 1 mg/ml, the mechanical action of a polytron probe (such as Brandon Sonifier) is first used for about 30 minutes and then, the assisted action in a ultrasonic bath, for about 2 hours.

In this variant, preferably, a controlled and constant electrochemical potential E/V of between -0.5/V and -2.0 V is applied, preferably equal to about E = -2.0 V. The application time preferably ranges between 5 minutes and 1 hour, and is preferably equal to about 30 min, under controlled stream of inert gas, preferably nitrogen, for example at a flow of about 0.3 cm³/min. In this way, the CaCO₃ nanoparticles in the electrolysis bath essentially undergo the same process as described above for the synthesis of pristine collagen particles and of the collagen particles functionalized with PVA. Advantageously, the slight turbulence in the electrochemical cell caused by the stream of gas allows a better transport of the nanoparticles inside the membrane pores.

In general, pristine or functionalized collagen particles in different morphologies are obtained by the process of the invention, particularly in the form of spheres, tubules or as cylinders.

Preferably, the tubules and the cylinders have an outer diameter of between 200 and 500 nm, and a length of between 100 and 500 µm.

The tubules, or nanotubules, are typically hollow and thus have a wall thickness, or in other words they have an outer diameter and an inner diameter. Preferably, the inner diameter is of between 50 and 200 nm.

The cylinders, or nanocylinders are typically internally solid.

The different morphology of the collagen particles mainly depends on the operating time of the potentiostat/galvanostat and on the electrochemical technique used. By way of example, the following Table 1 shows some examples of collagen particles produced, and the related process parameters. In the examples in the table, the concentration of tropocollagen is of between 1x10⁻³ M and 1x10⁻¹ M, preferably 1x10⁻³ M. In addition, the electrolyte solution is an aqueous acetate buffer, concentration of between 0.025 and 0.2 M, preferably 0.1 M at pH 4.7. Moreover, a membrane of Al₂O₃ was used, diameter = 30 mm, pore diameter = 200 nm, pore length = 100 µm, pore density = 1x10¹² pores/cm².

| **Table 1** | | |
|---|---|---|
| **Collagen particles** | **Operating time [s]** | **Electrochemical technique** |
| **Spheres** | 1800 | **Chronoamperometry** |
| Outer diameter = 200 nm | | Constant E/V = -1.0 V |
| **Tubules** | 3600 | **Chronoamperometry** Constant E/V = -1.0 V |
| Outer diameter = 200 nm | | |
| Length = 100 µm | | |
| Inner diameter = 100 nm | | |
| Thickness = 200 µm | | |
| **Cylinders** | 7200 | **Differential Pulse Voltammetry (DPV)** |
| Outer diameter = 200 nm | | **Potential** scan in the range from -1.0 to -2.0 V, for example with ***Autolab*** |
| Length = 100 µm | | |

When the particles are nanotubules, the outer diameter may range between 200 and 500 nm; and the inner diameter may range between 50 and 200 nm.

For example, there may be the following pairs of outer diameter and inner diameter: outer diameter of about 260nm and inner diameter of about 100nm; outer diameter of about 500 nm and inner diameter of about 200nm; outer diameter of about 100nm and inner diameter of about 20 nm.

The dimensions of the collagen particles are determined by instruments such as SEM, TEM and AFM, preferably TEM and AFM.

The above dimensions are determined statistically. For example, the length of the particles was obtained as average length of the particles.

By way of example, Fig. 3 shows a pristine collagen nanotubule having an outer diameter of about 260nm and an inner diameter of about 100nm. The micrograph was obtained by transmission electron microscope.

According to one aspect, the invention provides for the use of collagen particles, either pristine or functionalized, for the consolidation and stabilization of membranous supports containing collagen, such as deteriorated parchments, hides and leather, for example due to a natural aging mainly due to intrinsic causes of the raw material, and also to external causes such as poor preservation (such as altered thermo-hygrometric parameters, especially the moisture in indoor environments designed for the preservation of archival membranous materials; chemical pollutants; physical factors such as non-adequate lighting of the environments and biological causes due to micro-organisms).

An example of application in the field of consolidation and stabilization of papers and books heritage of a membranous nature is described hereinafter: nanocollagen (either pristine or functionalized with PVA and/or with CaCO₃ nanoparticles) can be used to prepare colloidal phases poly-dispersed in a liquid, which is preferably an alcohol, such as ethyl alcohol and/or isopropyl and/or tert-butyl alcohol. The colloidal phase can then be applied either by brush *(obverse and reverse* of a membranous surface) or as an aerosol (by means of a pressurized nebulizer) on the parchment, leather and/or hide support to be treated.

According to another example, the nanocollagen as such or further diluted with an alcohol, can be applied directly to the membranous support to be consolidated/stabilized with the aid of a brush.

According to yet another example, the colloidal dispersion of nanocollagen, as such or further diluted with an alcohol, can be nebulized using a pressurized nebulizer on the parchment support or on leather or hide.

According to a further aspect, the invention also provides a nanocolloid based on collagen/CaCO₃ nanoparticles to stabilize especially the parchment in terms of intrinsic content of Ca²⁺ ions.

According to the invention, the collagen/CaCO₃-based nanocomposite may either be applied by brush (obverse and reverse) on the deteriorated parchment support in order to carry out a stabilization intervention/treatment on the support. In particular, this stabilization treatment is carried out especially when the starting material (i.e. the raw material) of which the parchment is made is not of very good quality. The lack of Ca²⁺ due in this case to the quality of the raw material can be obviated through imbibition of Ca²⁺ (repeated several times over time) starting from the dispersion of the nanocomposite based on collagen/CaCO₃ nanoparticles.

| **Table 2 - Comparisons of treatment efficiencies Response index of the samples to flexibility and consolidating effect tests** | | | |
|---|---|---|---|
| **SAMPLES** | **FLEXIBILITY** | **CONSOLIDATING EFFECT** | **SHEEN** |
| *Untreated samples | 2 | None | None |
| Samples treated with traditional method | 0 | 1 | 1 |
| Samples treated with pristine collagen particles of the invention | 2 | 2 | 0 |

The results shown in the table express, with values from 0 to 2 (0 = no effect, 1 = appreciable effect; 2 = marked effect), the response degree of the samples to the parameters specified in the first row, in agreement with the literature Technical Type Specification *(Capitolato Speciale Tecnico Tipo, by Luca Richard De Bella, et al.; with the advice of Marina Bicchieri, Director of the Laboratory of Chemistry of ICRCPAL_ISTlTUTO CENTRALE PER IL RESTAURO E LA CONSERVAZIONE DEL PA TRIMONIO ARCHIVISTICO E LIBRARIO).*

Figs. 4a and 4b for example show each a micrograph obtained by Scanning Electron Microscope (SEM) under the acquisition conditions shown in the micrograph itself.

Fig. 4a shows a deteriorated and untreated leather sample.

Fig. 4b shows the same area of the same sample but after treatment with a dispersion of the invention, applied by brush.

Empty areas with apparent gaps in the untreated sample were completely "repaired".

Table 3 shows quantitative comparisons of thermo-calorimetric and optical measurements.

| **Table 3. Quantitative comparisons of thermo-calorimetric and optical measurements** | | |
|---|---|---|
| Samples | Calorimetric analysis Differential scanning calorimetry (DSC) | Optical property analysis: Colorimetry |
| | **ΔH_{d} / [J/g]** | **[ΔE]** |
| | **T_{d} (°C)** | |
| Untreated samples | 358 | 0.00 |
| | 107 | |
| Samples treated with traditional method | 389 | 21.28 |
| | 103 | |
| Samples treated with pristine collagen particles of the invention | **411** | **7.28** |
| | 103 | |

In table 3, the most significant values for the identification of the sample preservation condition are highlighted. Compared to the dehydration temperature which could be affected by changes in the external environmental parameters, the measurement of enthalpy is the energy (heat) which is necessary to cause the associated reaction to take place. It can, therefore, be regarded as a significant parameter for the assessment of the state of degradation of the sample, since the most degraded samples tend to absorb less water. Consequently, the higher the enthalpy, the more energy is required for dehydration, demonstrating a higher absorption, indicating a better state of preservation.

The study of the colorimetric components was carried out according to the CIE chart L*a*b*.

As is known, the lower the [ΔE], the smaller the color change induced as a result of treatment.

Each treatment must be non-invasive and above all respectful of the optical properties/color of the substrate to be treated.

After treatment with the nanocollagen of the present invention, the value of [ΔE] underwent (compared to the aged sample, the reference 0,00) the minimum chromatic variation, if compared with the value obtained after conventional treatment.

The collagen particles of the present invention also help preserving the acidic physiological pH of the membranous supports.

Advantageously, the expedient of using acetate buffer as electrolyte solution does not alter the physiological pH of hides and leathers (pH<7, thus acidic, as a function of the tanning processes they have undergone). Another buffer may also be used for the same purpose, such as carbonate buffer (CaCO₃) which is adapted for the consolidation of parchment (both because it represents a source of calcium for the parchment itself, and because it buffers in an alkaline environment, pH>7) which, unlike hides and leathers, is an alkaline environment (pH>7) as it undergoes a processing treatment different from that of hides and leathers. In fact, the parchment does not undergo tanning (such as hides and leathers) but mechanical operations, such as those listed below by way of example: stretching on a loom, fleshing, flattening, dusting and drying.

## Claims

1. A process for producing collagen particles, wherein there are provided:
- an electrochemical cell with three electrodes, comprising
- an electrolytic bath (6)
- a potentiostat/galvanostat (7)
- said three electrodes, of which a working electrode (2), a reference electrode (3), and an auxiliary electrode (4), at least partially immersed in the electrolytic bath (6), connected together by the potentiostat/galvanostat (7),
- a membrane (8) at least partially covered by an electrically conductive metal layer and having a plurality of pores (9),
wherein the membrane (8) is removably constrained to a surface of the working electrode (2), and is immersed in the electrolytic bath (6), wherein the electrolytic bath (6) contains tropocollagen at a concentration from 1 to 100 mM, in a buffered aqueous saline solution, the process comprising a step of
a) applying a controlled electrochemical potential (E/V) from -0.05 to -3.0 V by means of the potentiostat/galvanostat (7); whereby at least one collagen particle is formed within each pore (9) of the membrane (8).

2. A process according to claim 1, wherein the working electrode (2) is cylindrical in shape or is sheet-shaped.

3. A process according to claim 2, wherein when the working electrode (2) is cylindrical in shape, it has a base diameter (A)/height (L) ratio from 0.03 to 0.3 ± 10%.

4. A process according to claim 2 or 3, wherein when the working electrode (2) is cylindrical in shape, said surface is a base of the working electrode (2), and wherein the membrane is disc-shaped, having a diameter equal to the base diameter (A) of the working electrode (2).

5. A process according to any one of the preceding claims, wherein said step a) is carried out until the current intensity measured by the potentiostat/galvanostat (7) reaches a constant value in time.

6. A process according to any one of the preceding claims, wherein said step a) is carried out in a period of time from 30 minutes to 16 hours, preferably from 30 minutes to 4 hours.

7. A process according to any one of the preceding claims, wherein said electrically conductive metal layer is made of a noble metal, and preferably has a thickness from 10 to 50 nm.

8. A process according to any one of the preceding claims, wherein the membrane (8) is made of alumina or polycarbonate or cellulose or derivatives thereof, has a diameter from 13 to 47 mm, has a thickness from 100 to 500 µm, a pore density from 1×10¹¹ to 1×10¹⁴ pores/cm², and wherein the diameter of each pore of the membrane is from 2 to 400 nm.

9. A process according to any one of the preceding claims, wherein the electrolytic bath (6) further contains molecules of at least one additive
whereby during step a) the molecules of the at least one additive bind to the collagen particles.

10. A process according to claim 9, wherein said at least one additive is Polyvinyl Alcohol, and wherein the electrolytic bath (6) contains molecules of Polyvinyl Alcohol at a concentration from 0.05 to 5 mg/ml, in the buffered aqueous saline solution, whereby during step a) the molecules of Polyvinyl Alcohol bind to the collagen particles.

11. A process according to claim 9, wherein said at least one additive is CaCO₃ and wherein the electrolytic bath (6) contains molecules of CaCO₃ at a concentration from 0.05 to 5 mg/ml, in the buffered aqueous saline solution,
whereby during step a) the molecules of CaCO₃ bind to the collagen particles.

12. A process according to any one of the preceding claims, wherein after step a), the following steps are carried out:
b) detaching the membrane (8) containing the collagen particles from the working electrode (2),
c) washing the membrane with an acid solution to remove said electrically conductive metal layer,
d) dissolving the membrane by means of a solvent in order to extract said collagen nanotubules from the membrane pores.

13. Collagen particles obtainable from the process according to any one of claims 1 to 12.

14. Collagen particles according to claim 13, to which molecules of an additive are bound, preferably molecules of Polyvinyl Alcohol or molecules of CaCO₃.

15. Collagen particles according to claim 13 or 14, in the form of collagen tubules or in the form of collagen cylinders, having an outer diameter from 200 to 500 nm and a length from 100 to 500 µm.

16. A dispersion containing collagen particles according to any one of claims 13 to 15 dispersed in a liquid.

17. A dispersion according to claim 16, wherein the collagen particles are present in the liquid at a concentration from 0,1 to 10 mg/ml.

18. Use of a dispersion according to claim 16 or 17, for the treatment of a collagen-containing support.

## Patentansprüche

1. Verfahren zur Herstellung von Kollagenpartikeln, wobei Folgendes vorgesehen ist:
- eine elektrochemische Zelle mit drei Elektroden, umfassend
- ein elektrolytisches Bad (6)
- ein Potentiostat/Galvanostat (7)
- die drei Elektroden, die eine Arbeitselektrode (2), eine Referenzelektrode (3) und eine Hilfselektrode (4) sind, die mindestens teilweise in das elektrolytische Bad (6) eingetaucht sind, durch den Potentiostat/Galvanostat (7) miteinander verbunden,
- eine Membran (8), die mindestens teilweise von einer elektrisch leitenden Metallschicht bedeckt ist und eine Vielzahl von Poren (9) aufweist,
wobei die Membran (8) entfernbar an einer Oberfläche der Arbeitselektrode (2) befestigt ist und in das elektrolytische Bad (6) eingetaucht ist,
wobei das elektrolytische Bad (6) Tropokollagen in einer Konzentration von 1 bis 100 mM enthält, in einer gepufferten wässrigen Kochsalzlösung,
wobei der Prozess folgenden Schritt umfasst:
a) Anlegen eines kontrollierten elektrochemischen Potentials (E/V) von -0,05 bis -3,0 V unter Verwendung des Potentiostats/Galvanostats (7);
wobei mindestens ein Kollagenpartikel innerhalb jeder Pore (9) der Membran (8) gebildet wird.

2. Verfahren gemäß Anspruch 1, wobei die Arbeitselektrode (2) zylinder- oder plattenförmig ist.

3. Verfahren gemäß Anspruch 2, wobei die Arbeitselektrode (2), wenn sie zylinderförmig ist, ein Verhältnis von Grundflächendurchmesser (A)/Höhe (L) von 0,03 bis 0,3 ± 10 % aufweist.

4. Verfahren gemäß Anspruch 2 oder 3, wobei wenn die Arbeitselektrode (2) zylinderförmig ist, diese Oberfläche eine Basis der Arbeitselektrode (2) ist, und wobei die Membran scheibenförmig ist, wobei sie einen Durchmesser aufweist, der gleich dem Grundflächendurchmesser (A) der Arbeitselektrode (2) ist.

5. Verfahren gemäß einem der vorhergehenden Ansprüche, wobei der Schritt a) so lange durchgeführt wird, bis die vom Potentiostat/Galvanostat (7) gemessene Stromstärke einen zeitlich stetigen Wert erreicht.

6. Verfahren gemäß einem der vorhergehenden Ansprüche, wobei der Schritt a) in einem Zeitraum von 30 Minuten bis 16 Stunden, vorzugsweise von 30 Minuten bis 4 Stunden, durchgeführt wird.

7. Verfahren gemäß einem der vorhergehenden Ansprüche, wobei die elektrisch leitende Metallschicht aus einem Edelmetall hergestellt ist und vorzugsweise eine Dicke von 10 bis 50 nm aufweist.

8. Verfahren gemäß einem der vorhergehenden Ansprüche, wobei die Membran (8) aus Aluminiumoxid oder Polycarbonat oder Cellulose oder Derivaten davon hergestellt ist, einen Durchmesser von 13 bis 47 mm aufweist, eine Dicke von 100 bis 500 µm aufweist, eine Porendichte von 1×10¹¹ bis 1×10¹⁴ Poren/cm² aufweist und wobei der Durchmesser jeder Pore der Membran 2 bis 400 nm beträgt.

9. Verfahren gemäß einem der vorhergehenden Ansprüche, wobei das elektrolytische Bad (6) ferner Moleküle von mindestens einem Zusatzstoff enthält, wobei in Schritt a) die Moleküle des mindestens einen Zusatzstoffes an die Kollagenpartikel binden.

10. Verfahren gemäß Anspruch 9, wobei der mindestens eine Zusatzstoff Polyvinylalkohol ist und wobei das elektrolytische Bad (6) Polyvinylalkoholmoleküle in einer Konzentration von 0,05 bis 5 mg/mL in der gepufferten wässrigen Kochsalzlösung enthält,
wobei in Schritt a) die Polyvinylalkoholmoleküle an die Kollagenpartikel binden.

11. Verfahren gemäß Anspruch 9, wobei der mindestens eine Zusatzstoff CaCO₃ ist und wobei das elektrolytische Bad (6) CaCO₃-Moleküle in einer Konzentration von 0,05 bis 5 mg/mL in der gepufferten wässrigen Kochsalzlösung enthält,
wobei in Schritt a) die CaCO₃-Moleküle an die Kollagenpartikel binden.

12. Verfahren gemäß einem der vorhergehenden Ansprüche, wobei nach Schritt
a) folgende Schritte durchgeführt werden:
b) Ablösen der Membran (8), die die Kollagenpartikel enthält, von der Arbeitselektrode (2),
c) Waschen der Membran mit einer Säurelösung, um die elektrisch leitende Metallschicht zu entfernen,
d) Lösen der Membran mit Hilfe eines Lösungsmittels, um die Kollagen-Nanotubuli aus den Membranporen zu entnehmen.

13. Kollagenpartikel, die mit dem Verfahren gemäß einem der Ansprüche 1 bis 12 erhältlich sind.

14. Kollagenpartikel gemäß Anspruch 13, an die Moleküle eines Zusatzstoffes gebunden sind, vorzugsweise Polyvinylalkohol- oder CaCO₃-Moleküle.

15. Kollagenpartikel gemäß Anspruch 13 oder 14 in Form von Kollagentubuli oder in Form von Kollagenzylindern, aufweisend einen Außendurchmesser von 200 bis 500 nm und eine Länge von 100 bis 500 µm.

16. Dispersion, die Kollagenpartikel gemäß einem der Ansprüche 13 bis 15 enthält, dispergiert in einer Flüssigkeit.

17. Dispersion gemäß Anspruch 16, wobei die Kollagenpartikel in der Flüssigkeit in einer Konzentration von 0,1 bis 10 mg/mL vorhanden sind.

18. Verwendung einer Dispersion gemäß Anspruch 16 oder 17, für die Behandlung eines kollagenhaltigen Trägers.

## Revendications

1. Procédé de production de particules de collagène, dans lequel sont prévus :
- une cellule électrochimique ayant trois électrodes, comprenant
- un bain électrolytique (6)
- un potentiostat/galvanostat (7)
- lesdites trois électrodes, dont une électrode de travail (2), une électrode de référence (3) et une électrode auxiliaire (4), au moins partiellement immergées dans le bain électrolytique (6), connectées ensemble par le potentiostat/galvanostat (7),
- une membrane (8) au moins partiellement recouverte par une couche
métallique électriquement conductrice et ayant une pluralité de pores (9), dans lequel la membrane (8) est contrainte de manière amovible sur une surface de l'électrode de travail (2) et est immergée dans le bain électrolytique (6),
dans lequel le bain électrolytique (6) contient du tropocollagène à une concentration de 1 à 100 mM, dans une solution saline aqueuse tamponnée,
le procédé comprenant une étape consistant à
a) appliquer un potentiel électrochimique régulé (E/V) de -0.05 à -3.0 V au moyen du potentiostat/galvanostat (7) ;
moyennant quoi au moins une particule de collagène est formée à l'intérieur de chaque pore (9) de la membrane (8).

2. Procédé selon la revendication 1, dans lequel l'électrode de travail (2) possède une forme cylindrique ou est en forme de feuille.

3. Procédé selon la revendication 2, dans lequel lorsque l'électrode de travail (2) possède une forme cylindrique, elle possède un rapport diamètre de base (A)/hauteur (L) de 0,03 à 0,3 ± 10 %.

4. Procédé selon la revendication 2 ou 3, dans lequel lorsque l'électrode de travail (2) possède une forme cylindrique, ladite surface est une base de l'électrode de travail (2), et dans lequel la membrane est en forme de disque, ayant un diamètre égal au diamètre de base (A) de l'électrode de travail (2).

5. Procédé selon l'une quelconque des revendications précédentes, dans lequel ladite étape a) est effectuée jusqu'à ce que l'intensité du courant mesurée par le potentiostat/galvanostat (7) atteigne une valeur constante dans le temps.

6. Procédé selon l'une quelconque des revendications précédentes, dans lequel ladite étape a) est effectuée pendant une durée de 30 minutes à 16 heures, de préférence de 30 minutes à 4 heures.

7. Procédé selon l'une quelconque des revendications précédentes, dans lequel ladite couche métallique électriquement conductrice est constituée d'un métal noble, et de préférence possède une épaisseur de 10 à 50 nm.

8. Procédé selon l'une quelconque des revendications précédentes, dans lequel la membrane (8) est constituée d'alumine ou de polycarbonate ou de cellulose ou de leurs dérivés, possède un diamètre de 13 à 47 mm, possède une épaisseur de 100 à 500 µm, une densité de pores de 1×10¹¹ à 1×10¹⁴ pores/cm², et dans lequel le diamètre de chaque pore de la membrane est de 2 à 400 nm.

9. Procédé selon l'une quelconque des revendications précédentes, dans lequel le bain électrolytique (6) contient en outre des molécules d'au moins un additif moyennant quoi au cours de l'étape a) les molécules de l'au moins un additif se lient aux particules de collagène.

10. Procédé selon la revendication 9, dans lequel ledit au moins un additif est l'alcool polyvinylique, et dans lequel le bain électrolytique (6) contient des molécules d'alcool polyvinylique à une concentration de 0,05 à 5 mg/ml, dans la solution saline aqueuse tamponnée,
moyennant quoi au cours de l'étape a) les molécules d'alcool polyvinylique se lient aux particules de collagène.

11. Procédé selon la revendication 9, dans lequel ledit au moins un additif est CaCO₃ et dans lequel le bain électrolytique (6) contient des molécules de CaCO₃ à une concentration de 0,05 à 5 mg/ml, dans la solution saline aqueuse tamponnée, moyennant quoi au cours de l'étape
a) les molécules de CaCO₃ se lient aux particules de collagène.

12. Procédé selon l'une quelconque des revendications précédentes, dans lequel après l'étape a), les étapes suivantes sont effectuées :
b) détacher de l'électrode de travail (2) la membrane (8) contenant les particules de collagène,
c) laver la membrane avec une solution acide pour éliminer ladite couche métallique électriquement conductrice,
d) dissoudre la membrane au moyen d'un solvant afin d'extraire lesdits nanotubules de collagène à partir des pores de la membrane.

13. Particules de collagène aptes à être obtenues par le procédé selon l'une quelconque des revendications 1 à 12.

14. Particules de collagène selon la revendication 13, auxquelles des molécules d'un additif sont liées, de préférence des molécules d'alcool polyvinylique ou des molécules de CaCO₃.

15. Particules de collagène selon la revendication 13 ou 14, sous la forme de tubules de collagène ou sous la forme de cylindres de collagène, ayant un diamètre externe de 200 à 500 nm et une longueur de 100 à 500 µm.

16. Dispersion contenant des particules de collagène selon l'une quelconque des revendications 13 à 15 dispersées dans un liquide.

17. Dispersion selon la revendication 16, dans laquelle les particules de collagène sont présentes dans le liquide à une concentration de 0,1 à 10 mg/ml.

18. Utilisation d'une dispersion selon la revendication 16 ou 17, pour le traitement d'un support contenant du collagène.
